# EUROPEAN PATENT SPECIFICATION

(11) **EP 2 891 403 B1**
(45) Date of publication and mention of the grant of the patent: **24.07.2019**
(21) Application number: 13833577.3
(22) Date of filing: 31.01.2013
(51) Int. Cl.: A01N 43/90, A01N 25/04, A01N 25/12, A01P 5/00

(54) **CHEMICAL AGENT FOR CONTROLLING SOIL NEMATODE WHICH COMPRISES MACROLIDE-TYPE COMPOUND**
CHEMISCHES MITTEL ZUR BEKÄMPFUNG VON NEMATODEN IM BODEN MIT MACROLIDVERBINDUNG
AGENT CHIMIQUE POUR RÉGULER LES NÉMATODES DU SOL ET QUI COMPREND UN COMPOSÉ DU TYPE MACROLIDE

(30) Priority: 27.08.2012 JP 2012199862
(43) Date of publication of application: 08.07.2015
(73) Proprietor: Maruwa Biochemical Co., Ltd., Tokyo 101-0041 (JP)
(72) Inventor: KAWADA, Hiroshi, Tokyo 101-0041 (JP)
(74) Representative: Müller Schupfner & Partner Patent- und Rechtsanwaltspartnerschaft mbB
(86) International application number: PCT/JP2013/052774
(87) International publication number: WO 2014/034155

(56) References cited:
- EP-A1- 0 179 583
- CN-A- 1 586 199
- CN-A- 101 642 131
- CN-A- 101 642 131
- CN-A- 102 077 846
- CN-A- 102 396 474
- GB-A- 2 380 674
- JP-A- S5 765 330
- JP-A- H10 152 407
- JP-A- 2004 002 260
- JP-A- 2009 508 824
- JP-A- 2012 500 240
- US-A1- 2002 004 486
- US-A1- 2003 040 494
- NOYAKU SEIZAI GUIDE: 'Noyaku Seizai Guide' NOYAKU SEIZAI GUIDE 30 October 1997, pages 14 - 17, XP008180083

## Description

### Technical Field

The present invention relates to an emulsion concentrate consisting of: a 16-membered ring macrolide compound; a combination of anionic and non-ionic surfactant; and one or more water-soluble solvents having a boiling point of 150°C or higher, for controlling soil nematodes that parasitize agricultural crops.

### Background Art

Agricultural crops including annual crops and fruit trees universally suffer damages from plant parasitic nematodes. In order to prevent the damage caused by the plant parasitic nematode, techniques including what plants selected varieties having less susceptibility the damage, what applies fertilizer in the soil to inhibit a decrease of the yield amount of crops, and what wards off repeated cultivation of the same crop to avoid damages of nematodes parasitized particular plants.

But, annual vegetables or the like for which intensive cultivation is carried out have no choice but to be subjected to repeated cultivation, it is difficult for the vegetable or the like to be kept free of the damage caused by the nematode, chemical control has been carried out. To control nematodes living the inside of soil, chemical agents are required to be three-dimensionally diffused. Therefore, fumigants which are converted into gas and diffused, or organophosphorus-based compounds or carbamate-based compounds having a high water solubility have been used. As for the organophosphorus-based compound and carbamate-based compound with a high toxicity, a method for mixing the compound with the soil has been widely accepted, after preparing the compound into granules to ensure safety and easy to use.

Sixteen-membered ring macrolide compounds have high insecticidal activities against arthropods and nemathelminths, and are one family of antibiotic-derived agents that have been widely used in the world as anthelmintics for animals including humans and insecticides and acaricides for agriculture. In our country, 1% emamectin benzoate (emamectin CAS NO. 155569-91-8) named Affirm emulsion, 1% milbemectin (CAS NO. 51596-10-2, CAS NO. 51596-11-3) named Koromite emulsion, and 1% lepimectin (CAS NO. 171249-05-1, CAS NO. 171249-10-8) named Aniki emulsion have been used for the purpose of killing insects, mites and ticks in agriculture.

Sixteen membered-ring macrolide compounds have been the subject of many patent applications wherein bringing the macrolide compound into a liquid state by way of forming solutions, emulsions or suspensions has been a special topic of concern. In this connection the following literature is cited:
EP0179583 A1 relates to the preparation of compositions comprising poorly a water-soluble drug and a surfactant by a process that enhances the water dissolution rate and solubility of the drugs by in situ micelle formation.
GB2380674 A discloses to compositions in the form of an emulsion or microemulsion pre-concentrate for oral administration which is used for treatment of an autoimmune disorder or used as inflammatory.
US2002004486 A1 teaches to compositions for preventing or treating helminth, acarid or arthropod endo- or ectoparasitic infection comprising up to 10% of a surfactant.
US2003040494 A1 relates to an aqueous formulation of Ivermectin for the mass medication of animals comprising propylene glycol and polysorbate 80.
CN1586199 A discloses to micro-emulsions and their applications as pesticides including substantial amounts of water and ethyl acetate and octadichlorodipropyl ether.
CN102396474 A relates to compositions including spinetoram insecticides.
CN101642131 A teaches to a micro-emulsion including water and further includes Fosthiazate as an effective component.

Further, emamectin, milbemectin, and nemadectin (CAS NO.102130-84-7 3.6% product name MegaTop solution) have been used as pinewood nematode control agents. Besides, ivermectin (CAS NO. 70288-86-7), eprinomectin (CAS NO. 123997-26-2), selamectin (CAS NO. 165108-07-6), doramectin (CAS NO. 117704-25-3), milbemycin oxime (CAS NO. 129496-10-2), and moxidectin (CAS NO. 113507-06-5) have used as anthelmintics for animals. In the United States of America and other countries, 46.3% abamectin (CAS NO. 71751-41-2) suspension formulation (trade name AVICTA 500FS) have been practically used as seed treatment agents for controlling soil nematodes for cotton, soybean, and corn.
Patent Literature 1: EP 1922930A2

### Summary of Invention

### Technical Problem

For soil nematode control by compounds that cannot be expected to be converted into gas and diffused, mixing or diffusion of the compounds into the soil via tillage, water application, and rainwater is indispensable. However, there is an important issue for the compounds to avoid drifting to an unnecessary area by spraying the chemical agent or leaching the compounds due to groundwater penetration associated with water application and rainwater. In cases where 16-membered ring macrolide compounds having affect not only nematodes but also many arthropods or the like at very low concentrations are applied to the control of soil nematodes parasitized crops, the drifting and leaching of the chemical agent are a big issue. Because three-dimensional diffusion of the chemical agent in the soil is essential in soil nematode control, there has been a fundamental problem in that the chemical agent has no choice but to be used in a large amount per unit area.

A review of 16-membered ring macrolide compounds involved in extermination and control of nematodes has been reported from the Society of Nematologists in the United States of America (Non Patent Literature 1). Regarding avermectins including abameactin and related compounds, the review shows the results obtained from examination in various angles such as crops and treatment methods, actions thereof on soil nematodes, and chemical structure-activity relationships. Although the review recognizes avermectins' very high effect against plant parasitic nematodes, at the same time points out technological issues to be considered in the future in light of avermectins' physicochemical properties, for example, difficult to meet the growth environment of the soil nematode because of a very low water solubility and a poor mobility in many types of soils.

This review cited comparison of the abamectin granule with granules of organophosphorus-based compounds and carbamate-based compounds (Non Patent Literature 2); and what is described is that the abamectin granule exhibits at a low concentration of active ingredient though, it has a slightly lower ability capability of controlling the soil nematode than the granule of the organophosphorus-based compound or carbamate-based compound.
Further, a soil nematode control test by using the abamectin emulsion was recognized its effects on sandy soils whereas the control in a soil with a high organic substance content was difficult (Non Patent Literature 3). Thus far, techniques for controlling the soil nematode by the 16-membered ring macrolide compound have not been established, except for a method of preventing damages in taproots via seed disinfection using a suspension formulation of abamectin.
Non Patent Literature 1: Joseph A. Veech, Donald W. Dickson. Society of Nematorogists. 1987. VISTAS ON NEMATOLOGY, Chapter 20, 136-146
Non Patent Literature 2: Nordmeyer, D., and D.W. Dickson. 1985. Plant Disease 69:67-69
Non Patent Literature 3: Jean-Claude Cayrol, Caroline Djian and Jean-Pierre Frankouski. Fundam. appl. nematol., 1993, 16(3), 239-246

The 16-membered ring macrolide compound has a large molecular weight and hydrophobic. In term of the solubility to water, abamectin 1.21 mg/L, emamectin benzoate 24 mg/L, and milbemectin 0.88 mg/L are much lower than fosthiazate (CAS NO. 98886-44-3) 9.85 g/L and imicyafos (CAS NO. 140163-89-9) 77.6 g/L, both of which are organophosphorus-based soil nematode agents used in our country and oxamyl (CAS NO. 23135-22-0) 280 g/L which is a carbamate-based soil nematode agent. Further, abamectin exhibits a very high soil adsorption and considered to be quickly broken down by soil microorganisms (Non Patent Literature 4). In cases where abamectin is applied to Pleistocene volcanic ash soil which has been widely used in upland farming in Japan and is said to have an organic substance content of not less than 5%, it is presumably difficult to uniformly diffuse the active ingredient. In consideration of the results from the above previous test on the soil nematode control, safety for organisms in the surroundings, hydrolysis by a strong acid or strong base, physicochemical properties of being rapidly broken down by light, the development of new techniques has been demanded for the soil nematode control using the 16-membered ring macrolide compound.

Non Patent Literature 4: CDS Tomlin the Pesticide Manual Fifteenth Edition British Crop Protection Council 2009 3-4

### Solution to Problem

The present inventor has thus far studied safe and simple methods of using 16-membered ring macrolide compounds which have high basic activities but have been unable to be widely subjected to practical use as soil nematode control agents. As a result, the inventor has completed a soil nematode control technique that is easy to use and does not cause drifting, wherein an emulsion as defined in claim 1 can promptly diffuse in a treatment area with micelles being kept stable even in natural water; a solution obtained by diluting the emulsion with water is sprayed to the soil surface and then mixed with the soil; or the emulsion is adhered to mineral particles with a large specific gravity, dispersed as the particles on the soil surface, and then mixed the particles with the soil.

As for the granular formulation according to the present disclosure, the formulation can be prepared easily by dropping an emulsion which obtained by dissolving 16-membered ring macrolide compound in an organic solvent including a water-soluble organic solvent as a major solvent and surfactant, in mineral carrier with stirring, or spraying the emulsion to the mineral carrier.

Representative examples of the 16-membered ring macrolide compounds according to the present disclosure include abamectin, ivermectin, eprinomectin, doramectin, and moxidectin, but are not limited thereto.

In the case of the soil nematode control by abamectin, the required amount of the active ingredient is 20 g to 60 g per 10 a, which is almost equal to or slightly more than 0.17 kg/ha, which is the amount of active ingredient showing less effectual than the organophosphorus-based or carbamate-based nematocide described in Non Patent Literature 2 and 40 mg/m², which is the amount of active ingredient showing the effect in the sandy soil but requiring an investigation in a soil with a high content of organic substances described in Non Patent Literature 3.

To prepare the emulsion of the 16-membered ring macrolide compound according to the present disclosure, a solvent in which the active ingredient can be dissolved and a surfactant for emulsification are required. Incidentally, the 16-membered ring macrolide compound has a low solubility to the solvent because of large molecular weight, it is difficult to prepare a highly concentrated emulsion unless using a solvent having a high polarity.

Commonly-used emulsions are prepared by dissolving an active ingredient in an organic solvent dissolved sparingly in water and mixing a surfactant thereto. When water-soluble polar solvents are used, an active ingredient having a low water solubility causes separation of the component as the solvent migrates to water. Further, it has been known that clear emulsions with a wavelength shorter than visible light exhibits a higher stability of micelles as compared with a cloudy emulsion; and microemulsion formulations with water as a major solvent have been known. But, the cost of raw materials to be used is high and the microemulsion formulation is not suitable for substances susceptible to hydrolysis. In light of purposes of maintaining the product stability and maintaining the stability of a spray solution obtained by diluting the emulsion with water, the microemulsion formulation is considered to be a technology that is difficult to be employed on a commercial basis.

Non Patent Literature 5: the Special Committee on Agricultural Formulation and Application, Pesticide Science Society of Japan, Pesticide Formulation Guide, 1997, Incorporated association Japan Plant Protection Association

The soil nematode control emulsion concentrate of the invention consists of: 5 to 20 percent by weight of a 16-membered ring macrolide; 20 to 70 percent by weight of a combination of an anionic and a non-ionic surfactant; and one or more water-soluble solvents or a water-soluble solvents mixture; as described in claim 1 with preferred embodiments mentioned in the sub-claims. It is essential that the solvent used in the preparation of the emulsion of the present invention should have a high capability of dissolving active ingredients. At the same time, in order to keep safety in the production and stability of granules to which this emulsion is adhered, polar solvents having a high boiling point are desired. The one or more water-soluble solvents have a boiling point of 150°C or higher and are selected from the group consisting of: dimethyl sulfoxide, N-methylpyrrolidone, butyl lactate, dipropylene glycol, polypropylene glycol, diethylene glycol monobutyl ether, or ethyl lactate or mixtures thereof. Dimethyl sulfoxide is, in particular, preferred because of its high dissolution capacity and safety.

Surfactants have functions of forming micelles stable in water and diffusing an active ingredient in association with migration of soil water. To stabilize the micelle, a method of using an anionic surfactant and non-ionic surfactant in combination was used. The anionic surfactant is selected from the group consisting of: alkyl benzene sulfonate, alkyl naphthalene sulfonate, dialkyl sulfosuccinate, and polyoxyalkylene allyl phenyl ether sulfate.

The non-ionic surfactant is selected from the group consisting of: polyoxyethylene styrylphenyl ether and polyoxyalkylene allyl phenyl ether.

The total amount of anionic surfactant and non-ionic surfactant used in the formulation of the present invention is 20% by weight to 70% by weight and preferably 30% by weight to 50% by weight.

In cases where nematodes are directly controlled using emulsions, the prepared emulsion is only to be diluted with water and be sprayed to the soil surface to then mix as shown in, for example, Table 9-2 in Test Example 3 described below. Note that it is difficult to diffuse the chemical agent to lower layer portions in irrigation treatment to the soil surface, which thereby makes the soil nematode control difficult. Further, even in cases where the emulsion is mixed with the soil, uniform mixture with the soil may be interfered when the water content of the soil is excessively high; and caution is thus required.

Granules are in general prepared by adding a fine powder of montmorillonite-based mineral to clay and kneaded together with an active ingredient, followed by granulation and drying. Alternatively, used is a method of impregnating the active ingredient in a granulated and dried product of montmorillonite-based mineral with an oil adsorption capacity, or a sieved natural mineral-derived carrier with a high oil adsorption capacity such as attapulgite, pumice stone, calcined diatomaceous earth, zeolite, or pearlite; or a method of fixing an active ingredient to a carrier without a oil adsorption capacity such as silica stone or calcium carbonate using a water-soluble thickening agent.

In cases where 16-membered ring macrolide compounds with a low water solubility are used as active ingredients, desired is a method comprising preparing a highly concentrated emulsion and adhering the emulsion to the surface of mineral carrier capable to inhibit drifting because of a large specific gravity such as silica stone or calcium carbonate. The smaller the granular size of granule is, the more uniformly the active ingredient is distributed in the soil at the time of the mixture, which can lead to the stability of the effect. But, at the same time, in consideration of influence to organisms in the surroundings by drifting, particle size thereof is desired to be from 63 µm which is a lower limit particle size of microgranule F (particle size ranging from 63 µm to 212 µm) used as a drifting-inhibiting spray formulation in our country, to 1000 µm which is a medium particle size of common granules (300 µm to 1700 µm).

While water-soluble fixing agents may be used upon preparation of the granule, emulsions with a high viscosity can be, as they are, adhered to the mineral carrier as well. At that time, in order to attain uniform adhesion without peel-off, it is required that the concentration of active ingredient in the emulsion be from 5% by weight to 20% by weight. In the light of an amount of a granular nematode control agent of 20 kg per 10 a in a commonly-used treatment method of mixing the agent with the soil in our country, the concentration of the active ingredient is adjusted to 0.1% by weight to 0.3% by weight in a granular formulation of the 16-membered ring macrolide compound.

In cases where carriers easy to stick each other among particles because of a low oil adsorption capacity are used, the sticking can be prevent by adding fine powders such porous silicic acid in the range of 0.5% by weight to 1.5% by weight.

Incidentally the 16-membered ring macrolide compound is susceptible to an oxidation reaction and antioxidants are regularly used for the purpose of maintaining the stability with time of the product. For example, when dibutylhydroxytoluene (BHT) approved as a food additive in the United States of America is used, BHT is added to the product in 0.0002% by weight to 0.5% by weight.

### Advantageous Effects of Invention

The 16-membered ring macrolide compound that affects organisms in the surroundings at very low concentrations is uniformly diffused in a soil treatment area without drifting or seepage to an area outside the treatment area, which makes it possible to control soil nematodes which are harmful to crops.

### Description of Embodiments

Modes for carrying out the invention will be described based on formulation examples. Incidentally symbols shown in the tables below stand for the following active ingredients, surfactants, and solvents in parentheses.

### (Active ingredients)

ABA (abamectin), DOR (doramectin), EMA (emamectin)
EPR (eprinomectin), IVE (ivermectin), LEP (lepimectin)
MIL (milbemectin), MOX (moxidectin), NEM (nemadectin)
SEL (selamectin)

### (Surfactants)

NA41B (sodium alkylbenzenesulfonate,
   product name Newkalgen A-41B Takemoto Oil & Fat Co., Ltd.)
NEP70G (dialkyl sulfosuccinate,
   product name Newkalgen EP-70G Takemoto Oil & Fat Co., Ltd.)
NFS700G (polyoxyalkylene allyl phenyl ether sulfate,
   product name Newkalgen FS-700G Takemoto Oil & Fat Co., Ltd.)
SOLT15S (polyoxyethylene styrylphenyl ether sulphate,
   product name Sorpol T15-SPG Toho Chemical Industry Co., Ltd.)
NCP120 (polyoxyalkylene allyl phenyl ether,
   product name Newkalgen CP-120 Takemoto Oil & Fat Co., Ltd.)
SOLT15 (polyoxyethylene styrylphenyl ether,
   product name Sorpol T-15 Toho Chemical Industry Co., Ltd.)
S465 (dipolyoxyethylene alkyl ether,
   product name Surfynol 465 Nissin Chemical Industry Co., Ltd.)
SOL3080 (polyoxyethylene styrylphenyl ether, alkyl aryl sulfonate mixture,
   product name Sorpol 3080 Toho Chemical Industry Co., Ltd.)
SOL3880 (polyoxyethylene styrylphenyl ether, polyoxyethylene styrylphenyl etherformaldehyde condensate, alkyl benzenesulfonic acid calcium mixture,
   product name Sorpol 3880 Toho Chemical Industry Co., Ltd.)

### (Solvents)

AMD810 (fatty acid dimethyl amide having 8 to 10 carbon atoms, a product from Cognis GmbH)
BL (butyl lactate, a commercial product from PURAC bioquimica sa)
EL (ethyl lactate, a commercial product from Musashino Chemical Laboratory, Ltd.)
DEGBE (diethylene glycol monobutyl ether, a commercial product from Wako Pure Chemical Industries, Ltd.)
DMSO (dimethyl sulfoxide, a commercial product from Tokyo Chemical Industry Co., Ltd.)
DPG (dipropylene glycol, a commercial product from Wako Pure Chemical Industries, Ltd.)
2EHX (2-ethyl hexanol, a commercial product from Kishida Chemical Co., Ltd.)
NMP (N-methylpyrrolidone, a commercial product from Kishida Chemical Co., Ltd.)
PPG400 (polypropylene glycol MW400, a commercial product from Wako Pure Chemical Industries, Ltd.)
SF02 (aromatic hydrocarbon,
   product name Cactus Fines SF-02 Japan Energy Corporation)

### (Formulation Example 1) Preparation of abamectin emulsion part 1

To 40 mg or 53 mg of abamectin (a commercial product from Wako Pure Chemical Industries, Ltd., purity 96%), the following solvent and surfactant were added to prepare 500 mg of an emulsion. 50 µl of this was diluted in 50 ml of tap water (water hardness about 70). The state at the time of the dilution, and the change over time in precipitation generation when the diluted solution was left to stand at 22°C were observed for four days. The composition thereof and state in precipitation generation are shown in Table 1-1, Table 1-2, and Table 1-3. Examples 9 to 16 and 27-31 and 41 to 43 are not according to the claimed invention.

The state in precipitation generation in the tests below was evaluated as follows:

**Table 1-1]**

| Right: formulation number Below: component weight | NO.1 | NO.2 | NO.3 | NO.4 | NO.5 | NO.6 | NO.7 | NO.8 |
|---|---|---|---|---|---|---|---|---|
| ABA | 40 | 40 | 40 | 40 | 40 | 40 | 40 | 40 |
| SOL3080 | 130 | 180 | 230 | 230 | 180 | 180 | 230 | 180 |
| PPG400 | 75 | 75 | | 75 | 75 | 75 | | 75 |
| DMSO | 255 | 205 | 230 | 155 | 155 | 105 | 130 | 55 |
| BL | | | | | 50 | 100 | 100 | 150 |
| Total | 500 | 500 | 500 | 500 | 500 | 500 | 500 | 500 |
| State at the time of dilution | Clear | Clear | Clear | Clear | Clear | Clear | Clear | Clear |

| Time elapsed | State of precipitation generation of the diluted emulsion liquid | | | | | | | |
|---|---|---|---|---|---|---|---|---|
| After 2 hours | - | - | - | - | - | - | - | - |
| After 8 hours | - | - | - | - | - | - | - | - |
| After 1 day | - | - | - | - | - | - | - | - |
| After 4 days | ± | ± | - | ± | ± | ± | ± | ± |

| | | | | | | | | |
|---|---|---|---|---|---|---|---|---|
| - No precipitation is noticed at all. ± Precipitation is very slightly noticed. + Precipitation is noticed. ++ Obvious precipitation is noticed. | | | | | | | | |

**[Table 1-2] - reference examples 9-16**

| Right: composition Below: component weight | NO.9 | NO.10 | NO.11 | NO.12 | NO.13 | NO.14 | NO.15 | NO.16 |
|---|---|---|---|---|---|---|---|---|
| ABA | 40 | 40 | 53 | 40 | 40 | 40 | 40 | 40 |
| SOL3080 | 180 | 180 | 217 | 180 | 180 | 180 | 230 | 180 |
| PPG400 | 75 | 75 | | 75 | 75 | 75 | | 75 |
| DMSO | 155 | 105 | 130 | 55 | 155 | 105 | 130 | 55 |
| AMD810 | 50 | 100 | 100 | 150 | | | | |
| 2EHX | | | | | 50 | 100 | 100 | 150 |
| Total | 500 | 500 | 500 | 500 | 500 | 500 | 500 | 500 |
| State at the time of dilution | Clear | Fluore scent | Fluore scent | Fluore scent | Clear | cloudy | Fluore scent | cloudy |

| Time elapsed | State of precipitation generation of the diluted emulsion liquid | | | | | | | |
|---|---|---|---|---|---|---|---|---|
| After 2 hours | - | - | - | - | - | - | - | ± |
| After 8 hours | - | - | - | - | - | - | - | + |
| After 1 day | - | - | - | - | - | ± | + | ++ |
| After 4 days | + | + | + | + | + | + | + | ++ |

**Table 1-3**

| Right: formulation number Below: component weight | NO.17 | NO.18 | NO.19 | NO.20 | NO.21 | NO.22 | NO.23 |
|---|---|---|---|---|---|---|---|
| ABA | 40 | 40 | 40 | 40 | 40 | 40 | 40 |
| SOL3080 | 130 | 130 | 180 | 230 | 230 | 280 | 330 |
| PPG400 | 200 | 150 | 150 | 100 | 50 | 50 | |
| DMSO | 130 | 180 | 130 | 130 | 180 | 130 | 130 |
| Total | 500 | 500 | 500 | 500 | 500 | 500 | 500 |
| State at the time of dilution | Clear | Clear | Clear | Clear | Clear | Clear | Clear |

| Time elapsed | State of precipitation generation of the diluted emulsion liquid | | | | | | |
|---|---|---|---|---|---|---|---|
| After 2 hours | - | - | - | - | - | - | - |
| After 8 hours | - | - | - | - | - | - | - |
| After 1 day | + | ± | ± | ± | - | ± | - |
| After 4 days | + | ± | + | ± | - | ± | - |

As shown in the above Table 1-2 in Formulation Example 1, in the case of a polar solvent with a poor water solubility such as AMD810 or 2EHX, it was evident that the stability of micelle decreased. Further, as shown in comparison between NO. 16 and NO. 14 in Table 1-2, the stability of emulsification can be improved by reducing the amount of the solvent with a poor water solubility.

### (Formulation Example 2) Preparation of abamectin emulsion part 2

To 40 mg of abamectin, the following surfactant and solvent were added to prepare 500 mg of an emulsion. 50 µl of this was diluted in 50 ml of tap water (water hardness about 70). In the same manner as described in Formulation Example 1, the state at the time of the dilution, and the change over time in precipitation generation when the diluted solution was left to stand at 22°C were observed for four days. The composition thereof and state in precipitation generation are shown in Table 2.

**[Tab. 2] examples 24-26 and reference examples 27-31**

| Right: formulation number Below: component weight | NO.24 | NO.25 | NO.26 | NO.27 | NO.28 | NO.29 | NO.30 | NO.31 |
|---|---|---|---|---|---|---|---|---|
| ABA | 40 | 40 | 40 | 40 | 40 | 40 | 40 | 40 |
| NCP120 | 140 | 140 | 140 | | | | | |
| S465 | | | | 140 | | | | |
| NA41B | 190 | | | 190 | | | | |
| NEP70G | | 190 | | | | | | |
| NFS700G | | | 190 | | | | | |
| SOL3080 | | | | | | | 180 | |
| SOL3880 | | | | | 80 | 180 | | |
| DMSO | 130 | 130 | 130 | 130 | 130 | 130 | 130 | 330 |
| EL | | | | | | | | 130 |
| SF02 | | | | | 250 | 150 | 150 | |
| Total | 500 | 500 | 500 | 500 | 500 | 500 | 500 | 500 |
| State at the time of dilution | Clear | Clear | Clear | Cloudy | Cloudy | Fluore scent | Fluore scent | Cloudy |

| Time elapsed | State of precipitation generation of the diluted emulsion liquid | | | | | | | |
|---|---|---|---|---|---|---|---|---|
| After 2 hours | - | - | - | - | ++ | - | - | - |
| After 8 hours | - | - | - | - | ++ | - | - | ± |
| After 1 day | - | - | - | ± | ++ | ± | - | + |
| After 4 days | ± | - | ± | + | ++ | + | - | + |

As shown in reference examples NO. 28 and NO. 29 in Table 2, in the case of using a poor water solubility hydrocarbon-based solvent (SF02), the amount of the solvent used needed to be reduced for the stability of micelle, as shown in the comparison between NO. 16 and NO. 14 in Table 1-2. Further, in the case of using the non-ionic surfactant and anionic surfactant in combination, significant difference ascribed to the difference in the surfactant was not noticed in terms of the stability of micelle. Examples 9 to 16 and 27 to 31 are not according to the invention.

### (Formulation Example 3) Change of water-soluble solvent and active ingredient and emulsifiability

By using the following surfactant and solvent, 7.5% emulsions of abamectin, ivermectin (a commercial product from Wako Pure Chemical Industries, Ltd., purity 95%), doramectin (a commercial product from Kanto Chemical Co., Inc., purity 96%), and moxidectin (a commercial product from Kanto Chemical Co., Inc., purity 96.5%) were prepared. Further, by using selamectin 12% (Revolution 12%, a product from Pfizer Japan Inc.) as an anthelmintic instilled onto the skin of animals, the following solvent and surfactant, selamectin 5.0% emulsion was prepared. The selamectin emulsion was diluted 667-fold with tap water (water hardness about 70) and the other prepared emulsions were diluted 1,000-fold. In the same manner as described in Formulation Example 1, the state at the time of the dilution, and the change over time in precipitation generation when the diluted solution was left to stand at 22°C were observed for four days. The composition thereof and state in precipitation generation are shown in Table 3.

**[Table 3]**

| Right: formulation number Below: component weight | NO.32 | NO.33 | NO.34 | NO.35 | NO.36 | NO.37 | NO.38 | NO.39 |
|---|---|---|---|---|---|---|---|---|
| ABA | 40 | 40 | 40 | 40 | | | | |
| IVE | | | | | 40 | | | |
| DOR | | | | | | 40 | | |
| MOX | | | | | | | 40 | |
| SEL12% | | | | | | | | 210 |
| SOL3080 | 180 | 180 | 180 | 230 | 230 | 230 | 230 | 230 |
| DMSO | 130 | 130 | 130 | | 230 | 230 | 230 | 60 |
| EL | 150 | | | | | | | |
| DEGBE | | 150 | | | | | | |
| DPG | | | 150 | | | | | |
| NMP | | | | 230 | | | | |
| Total | 500 | 500 | 500 | 500 | 500 | 500 | 500 | 500 |
| State at the time of dilution | Clear | Clear | Clear | Clear | Clear | Clear | Clear | Clear |

| Time elapsed | State of precipitation generation of the diluted emulsion liquid | | | | | | | |
|---|---|---|---|---|---|---|---|---|
| After 2 hours | - | - | - | - | - | - | - | - |
| After 8 hours | - | - | - | - | - | - | - | - |
| After 1 day | - | - | - | - | - | - | - | - |
| After 4 days | - | - | ± | - | ± | - | - | - |

As shown NO. 32 to NO. 35 in Table 3, the stability of micelle was secured by using the solvent with a high water solubility. Also in the other 16-membered ring macrolide compounds similar to abamectin, the preparation of the stable emulsion was feasible. Incidentally, as for a 1,600-fold diluted solution (75 ppm) of Revolution 12% as an anthelmintic instilled onto the skin of animals, the crystals thereof were generated at the time of the dilution.

### (Formulation Example 4) Preparation of highly concentrated emulsion

By using the following dimethyl sulfoxide and surfactant, 15% emulsions of abamectin, doramectin, eprinomectin (a commercial product from Kanto Chemical Co., Inc., purity 94%), ivermectin, and moxidectin were prepared. The prepared emulsion was diluted 1,000-fold with tap water (water hardness about 70). In the same manner as described in Formulation Example 1, the state at the time of the dilution, and the change over time in precipitation generation when the diluted solution was left to stand at 22°C were observed for four days. The composition thereof and state in precipitation generation are shown in Table 4.

**[Table 4] Examples 40, 44-47 and reference examples 41-43**

| Right: formulation number Below: component weight | NO.40 | NO.41 | NO.42 | NO.43 | NO.44 | NO.45 | No.46 | No.47 |
|---|---|---|---|---|---|---|---|---|
| ABA | 80 | 80 | 80 | 80 | | | | |
| DOR | | | | | 80 | | | |
| EPR | | | | | | 80 | | |
| IVE | | | | | | | 80 | |
| MOX | | | | | | | | 80 |
| DMSO | 210 | 210 | 210 | 210 | 210 | 210 | 210 | 210 |
| SOL3080 | 210 | | | | 210 | 210 | 210 | 210 |
| SOLT15 | | 60 | 94 | 130 | | | | |
| SOLT15S | | 150 | 116 | 80 | | | | |
| Total | 500 | 500 | 500 | 500 | 500 | 500 | 500 | 500 |
| State at the time of dilution | Clear | Clear | Clear | Clear | Clear | Clear | Clear | Clear |

| Time elapsed | State of precipitation generation of the diluted emulsion liquid | | | | | | | |
|---|---|---|---|---|---|---|---|---|
| After 2 hours | - | - | - | - | - | - | - | - |
| After 8 hours | - | - | - | - | - | - | - | - |
| After 1 day | - | - | - | - | - | - | - | - |
| After 4 days | ± | - | ± | ± | ± | ± | ± | ± |

As shown above, stable preparation was feasible in the highly concentrated emulsion as well.

### (Formulation Example 5) Preparation of abamectin granule

To a 100 ml-Erlenmeyer flask, silica stone or attapulgite with varied particle sizes was placed, and a predetermined amount of the abamectin emulsion of NO.3 and NO. 11 in Formulation Example 1 and NO. 28 in Formulation Example 2 was dropped while stirred with a magnetic stirrer. As for those with the silica stone as a carrier, in order to prevent from sticking, porous silicic acid was further added to prepare granules. The composition thereof is shown in Table 5.

The carriers used and the particle size thereof are as follow:
Silica stone No. 5 150 µm to 850 µm (a product from Mikawa Silica Co., Ltd.)
Silica stone V No. 7 106 µm to 300 µm (a product from Mikawa Silica Co., Ltd.)
Attapulgite 24/48 300 µm to 710 µm (a product from OIL-DRY Corporation of America)
Porous silicic acid (Carplex #80, a product from DSL. Japan Co., Ltd.)

**[Table 5] Examples SI710, SI515, SI715 AT015 and Reference examples SI715B and SI720**

| Right: formulation symbol | SI710 | SI515 | SI715 | AT015 | SI715B | SI720 |
|---|---|---|---|---|---|---|
| Below: component weight | | | | | | |
| NO.3 emulsion | 140 | 210 | 210 | 210 | | |
| NO.11emulsion | | | | | | 210 |
| NO.28 emulsion | | | | | 210 | |
| Silica stone No. 5 | | 9640 | | | | |
| Silica stone V No. 7 | 9760 | | 9640 | | 9640 | 9640 |
| Attapulgite | | | | 9790 | | |
| Porous silicic acid | 100 | 150 | 150 | | 150 | 150 |
| Total | 10000 | 10000 | 10000 | 10000 | 10000 | 10000 |
| Active ingredient concentration | 0.10% | 0.15% | 0.15% | 0.15% | 0.15% | 0.20% |

The numerical values in the above tables except for those of the concentration of active ingredient are all in mg.

(Formulation Example 6) Preparation of abamectin granule and doramectin granule To a 100 ml-Erlenmeyer flask, attapulgite or silica stone with varied particle sizes was placed and while stirred with a magnetic stirrer, 0.15% granules were prepared using abamectin 15% emulsion of NO. 40 and doramectin 15% emulsion of NO. 44 in Formulation Example 4 in the same manner as described in Formulation Example 5. The composition thereof is shown in Table 6.

**[Table 6]**

| Right: formulation symbol | AT015A | SI515A | SI715A | AT015D | SI515D | SI715D |
|---|---|---|---|---|---|---|
| Below: component weight | | | | | | |
| NO.40 emulsion | 100 | 100 | 100 | | | |
| NO.44 emulsion | | | | 100 | 100 | 100 |
| Silica stone No. 5 | | 9830 | | | 9830 | |
| Silica stone V No. 7 | | | 9830 | | | 9830 |
| Attapulgite | 9900 | | | 9900 | | |
| Porous silicic acid | | 70 | 70 | | 70 | 70 |
| Total | 10000 | 10000 | 10000 | 10000 | 10000 | 10000 |

The numerical values in the above tables are all in mg.

### (Nematode Control Test Example 1) Macrolide-based compound's capability of controlling root-knot nematodes

Each of abamectin 7.5% emulsion from NO.3 in Formulation Example 1; doramectin 7.5% emulsion, ivermectin 7.5% emulsion, moxidectin 7.5% emulsion, and selamectin 5.0% emulsion in Formulation Example 3; and emamectin benzoate 1% emulsion (Affirm emulsion, a product from Syngenta Japan K. K.), milbemectin 1% emulsion (Koromite emulsion, a product from Mitsui Chemicals Agro, Inc.), lepimectin 1% emulsion (Aniki emulsion, a product from Mitsui Chemicals Agro, Inc.), and nemadectin 3.6% solution (MegaTop solution, a product from Rikengreen Co., Ltd.) which were commercially available 16-membered macrolide-based insecticides were diluted in tap water (water hardness about 70) and prepared at a concentration of active ingredient of 10 ppm.

One liter of Pleistocene volcanic ash soil in which sweet potato root-knot nematodes had proliferated (the mean of initial sweet potato root-knot nematode density in the fourth- repeated cultivations: 235 nematodes/20 g of soil) was placed in a polyethylene bag and 30 ml of 10 ppm liquid of each chemical agent was mixed therewith while sprayed. The soil mixed with the chemical agent was filled in a pot with a surface area of 162 cm². A group where 1 L of soil was mixed and treated with 200 mg of a commercially available organophosphorus-based nematocide fosthiazate 1.5% granule (Ishihara Nemathorin Ace granule, a product from Ishihara Sangyo Kaisha, Ltd.) as a control chemical agent and a group with no treatment were set up. After the treatment with the chemical agent, three stocks of cherry tomato (variety Regina nursery plant with three true leaves, a product from Takii seed Co., Ltcd.) were planted. The test was repeated twice and cultivation management was conducted in a greenhouse.

After six weeks, the weight of aerial parts and root-knot parasitism level were investigated. The means of the results are shown in Table 7-1 and Table 7-2.

In the test below, evaluation criteria for the root-knot parasitism level are as follows:
The evaluation was conducted using additional intermediate levels of 0.5 between each parasitism levels below at the investigation.
Parasitism level 0: No root-knots are noted at all.
Parasitism level 1: The formation of root-knots is noted in not more than 25% of the root.
Parasitism level 2: The formation of root-knots is noted in more than 25% and not more than 50% of the root.
Parasitism level 3: The formation of root-knots is noted in more than 50% and not more than 75% of the root.
Parasitism level 4: The formation of root-knots is noted in more than 75% of the root.

**[Table 7-1]**

| Name of active ingredient | ABA | DOR | EMA | IVE | LEP | MIL |
|---|---|---|---|---|---|---|
| Sprayed liquid concentration ppm | 10 | 10 | 10 | 10 | 10 | 10 |
| Concentration in soil ppm | 0.3 | 0.3 | 0.3 | 0.3 | 0.3 | 0.3 |
| Aerial part weight g/stock | 3.7 | 3.8 | 3.3 | 3.7 | 3.1 | 2.5 |
| Root-knot parasitism level | 0.75 | 0.58 | 3.92 | 0.83 | 4.00 | 4.00 |

**[Table 7-2]**

| Name of active ingredient | MOX | NEM | SEL | Control chemical agent | No treatment |
|---|---|---|---|---|---|
| Sprayed liquid concentration ppm | 10 | 10 | 10 | | |
| Concentration in soil ppm | 0.3 | 0.3 | 0.3 | 3.0 | |
| Aerial part weight g/stock | 4.1 | 3.0 | 2.6 | 3.6 | 2.1 |
| Root-knot parasitism level | 1.33 | 4.00 | 4.00 | 0.00 | 4.00 |

As shown above, the tomato exhibited poor growth upon the shift to the low temperature. All of groups with the chemical agent treatment where the emulsion was diluted to spray to and mix with the soil exhibited a better aerial parts weight, as compared with the group with no treatment. At a concentration of active ingredient in the soil of 0.3 ppm, compounds showing an apparent nematode control effect were abamectin, doramectin, and ivermectin in the avermectin-based compounds. Among the same avermectin-based compounds, selamectin and emamectin having a shorter suger chain length apparently exhibited fewer effects. It is presumed that because a hydroxy group in the suger chain of emamectin was substituted with a methylamino group to become benzoates, its affinity with the soil was increased, thereby being prevented the diffusion in the soil. Besides, the effect was noticed in moxidectin of milbemycin-based compounds having no suger chain.

### (Nematode Control Test Example 2) Abamectin's and moxidectin's capability of controlling root-knot nematodes

Abamectin 7.5% emulsion from NO.3 in Formulation Example 1 and moxidectin 7.5% emulsion from NO. 38 in Formulation Example 3 were prepared by diluting with tap water (water hardness about 70) at a concentration of active ingredient of 5 ppm, 10 ppm, and 20 ppm. One liter of Pleistocene volcanic ash soil in which sweet potato root-knot nematodes had proliferated (initial sweet potato root-knot nematode density: the mean in fourth-repeated cultivations 260 nematodes/20 g of soil) was placed in a polyethylene bag and 30 ml of each of the above was mixed therewith while sprayed.

The soil mixed with the chemical agent was filled in a pot with a surface area of 162 cm². A group where 1 L of soil was mixed and treated with 200 mg of a commercially available organophosphorus-based nematocide fosthiazate 1.5% granule as a control chemical agent and a group with no treatment were set up. After the treatment with the chemical agent, four stocks of cherry tomato (variety Regina nursery plant with four true leaves) were planted. The test was repeated twice and cultivation management was conducted in a greenhouse. After eight weeks, the weight of aerial parts and root-knot parasitism level were investigated. The means of the results are shown in Table 8.

**[Table 8]**

| Name of active ingredient | ABA | ABA | ABA | MOX | MOX | MOX | Control chemical agent | No treatment |
|---|---|---|---|---|---|---|---|---|
| Sprayed liquid concentration ppm | 5 | 10 | 20 | 5 | 10 | 20 | | |
| Concentration in soil ppm | 0.15 | 0.3 | 0.6 | 0.15 | 0.3 | 0.6 | 3.0 | |
| Aerial part weight g/stock | 55 | 49 | 45 | 44 | 54 | 42 | 43 | 18 |
| Root-knot parasitism level | 2.38 | 1.17 | 1.00 | 2.81 | 1.75 | 1.38 | 1.25 | 4.00 |

As for the capability of controlling nematodes, abamectin exhibited a slightly better effect than moxidectin. Any chemical agents exhibited a root-knot parasitism level of more than 2 at a concentration in the soil of 0.15 ppm and were judged to have an insufficient effect in cases where the nematode density was high or the content of organic substances in the soil is high. (Nematode Control Test Example 3) Capability of controlling root-knot nematodes according to difference in the type of abamectin granules and difference in treatment methods with chemical agent

One liter of Pleistocene volcanic ash soil in which sweet potato root-knot nematodes had proliferated (initial sweet potato root-knot nematode density: the mean in fourth-repeated cultivations 83 nematodes/20 g of soil) was filled in a pot with a surface area of 162 cm² and a predetermined amount of each of the granules shown in Table 5 in Formulation Example 5 was mixed with the soil.

Further, abamectin 7.5% emulsion from NO.3 in Formulation Example 1 was diluted with tap water (water hardness about 70) to prepare a 100 ppm solution and 10 ppm solution; and 3 ml of the 100 ppm solution and 30 ml of the 10 ppm solution were mixed therewith while sprayed. A group where 1 L of soil was mixed and treated with 200 mg of fosthiazate 1.5% granule as a control chemical agent and a group with no treatment were set up. After the treatment with the chemical agent, three stocks of cherry tomato (variety Regina nursery plant with four true leaves) were planted. Further, after the cherry tomato was planted, a group with a soil surface irrigation treatment using 30 ml of abamectin 10 ppm liquid was set up. The test was repeated twice and cultivation management was conducted in a greenhouse. After eight weeks, the weight of aerial parts and root-knot parasitism level were investigated. The means of the results are shown in Table 9-1 and Table 9-2.

**Table 9-1]**

| Formulation symbol | SI710 | SI710 | SI515 | SI715 | AT015 | SI715B | SI720 |
|---|---|---|---|---|---|---|---|
| Amount of treatment chemical agent mg/L of soil | 200 | 400 | 200 | 200 | 200 | (ref.) 200 | (ref.) 200 |
| Concentration in soil ppm | 0.2 | 0.4 | 0.3 | 0.3 | 0.3 | 0.3 | 0.4 |
| Method of treating soil | Mixing | Mixing | Mixing | Mixing | Mixing | Mixing | Mixing |
| Aerial part weight g/stock | 32 | 33 | 31 | 29 | 33 | 30 | 31 |
| Root-knot parasitism level | 1.08 | 0.83 | 1.08 | 0.75 | 1.42 | 1.08 | 0.92 |

**[Table 9-2]**

| Formulation number Component concentration in treatment liquid | NO.3 100ppm | NO.3 10ppm | NO.3 10ppm | Control chemical agent | No treatment |
|---|---|---|---|---|---|
| Amount of treatment chemical agent mg/L of soil | 3000 | 30000 | 30000 | 200 | |
| Concentration in soil ppm | 0.3 | 0.3 | 0.3 | 3.0 | |
| Method of treating soil | Mixing | Mixing | Surface irrigatio n | Mixing | |
| Aerial part weight g/stock | 28 | 30 | 29 | 30 | 27 |
| Root-knot parasitism level | 0.75 | 1.00 | 2.08 | 0.25 | 3.17 |

### (Nematode Control Test Example 4) Comparison of capability of controlling nematodes in active ingredients, carriers, and particle sized

One liter of Pleistocene volcanic ash soil in which sweet potato root-knot nematodes had proliferated (initial sweet potato root-knot nematode density, the mean in twice-repeated cultivations 48 nematodes/20 g of soil) was filled in a pot with a surface area of 162 cm² and a predetermined amount of each of the granules shown in Table 6 in Formulation Example 6 was mixed with the soil. A group where 1 L of soil was mixed and treated with 200 mg of fosthiazate 1.5% granule as a control chemical agent and a group with no treatment were set up. After the treatment with the chemical agent, three stocks of cherry tomato (variety Regina nursery plant with four true leaves) were planted. The test was repeated twice and cultivation management was conducted in a greenhouse. After eight weeks, the weight of aerial parts and root-knot parasitism level were investigated. The means of the results are shown in Table 10-1 and Table 10-2.

**[Table 10-1]**

| Formulation symbol | AT015A | SI515A | SI715A | Control chemical agent |
|---|---|---|---|---|
| Amount of treatment chemical agent mg/L of soil | 200 | 200 | 200 | 200 |
| Concentration in soil ppm | 0.3 | 0.3 | 0.3 | 3.0 |
| Method of treating soil | Mixing | Mixing | Mixing | Mixing |
| Aerial part weight g/stock | 54 | 55 | 66 | 50 |
| Root-knot parasitism level | 1.50 | 0.83 | 0.75 | 0.08 |

**[Table 10-2]**

| Formulation symbol | AT015D | SI515D | SI715D | No treatment |
|---|---|---|---|---|
| Amount of treatment chemical agent mg/L of soil | 200 | 200 | 200 | |
| Concentration in soil ppm | 0.3 | 0.3 | 0.3 | |
| Method of treating soil | Mixing | Mixing | Mixing | |
| Aerial part weight g/stock | 54 | 52 | 59 | 58 |
| Root-knot parasitism level | 1.75 | 1.08 | 0.67 | 2.92 |

From the above Nematode Control Test Example 1, Nematode Control Test Example 2, Nematode Control Test Example 3, and Nematode Control Test Example 4, it became apparent that even if Pleistocene volcanic ash soil including a high organic substance content is used for a cultivation, the sweet potato root-knot nematode can be effectively controlled by diluting the emulsion of the 16-membered ring macrolide compound prepared using mainly the water-soluble solvent according to the present disclosure with water, and to mix with the soil while spraying, or by preparing the granule using the emulsion, and mixing the granule with the soil at a concentration of active ingredient of 0.2 ppm to 0.6 ppm. Incidentally, as shown in Nematode Control Test Example 3 even if an irrigation treatment with the diluted emulsion according to the present disclosure in the amount of 1.85 t/10 a was carried out on the surface of Pleistocene volcanic ash soil, the irrigation treatment exhibited a lower nematode control effect than the mixing treatment, it was judged that the migration of the active ingredient to the lower portion was insufficient. Further, as shown in Table 9-1 in Nematode Control Test Example 3, when a microemulsion formulation that is clear at the time of the dilution was compared with a formulation that is cloudy at the dilution, the microemulsion formulation was slightly better. Further, the preparation with a smaller particle size exhibited a more excellent effect than the preparation with a larger particle size. Further, as shown in Nematode Control Test Example 4, it was presumed that the preparation with, as a carrier, attapulgite which is considered to have a high oil adsorption capacity and a low ion exchange capacity was inferior to the preparation with silica stone as a carrier and exhibited insufficient dissolution of the active ingredient.

## Claims

1. A soil nematode control emulsion concentrate consisting of:
5 to 20 percent by weight of a 16-membered ring macrolide compound;
20 to 70 percent by weight of a surfactant, wherein the surfactant is a combination of an anionic surfactant and a non-ionic surfactant,
wherein the anionic surfactant is any selected from the group consisting of alkyl benzene sulfonate,
alkyl naphthalene sulfonate,
dialkyl sulfosuccinate, and
polyoxyalkylene allyl phenyl ether sulfate, and
wherein the non-ionic surfactant is any selected from the group consisting of polyoxyethylene styrylphenyl ether and
polyoxyalkylene allyl phenyl ether; and
one or more water-soluble solvents having a boiling point of 150°C or higher,
wherein the one or more water-soluble solvents are selected from the group consisting of butyl lactate, ethyl lactate, dipropylene glycol, polypropylene glycol, diethylene glycol monobutyl ether, dimethyl sulfoxide, and N-methylpyrrolidone.

2. The soil nematode control emulsion concentrate according to Claim 1, wherein the 16-membered ring macrolide compound is any of abamectin (CAS NO. 71751-41-2), ivermectin (CAS NO. 70288-86-7), eprinomectin (CAS NO. 123997-26-2), doramectin (CAS NO. 117704-25-3), and moxidectin (CAS NO. 113507-06-5).

3. A nematode control agent comprising the soil nematode control emulsion concentrate according to Claim 1 or 2 and a mineral carrier having a particle size of 63 µm to 1000 µm.

4. A method of controlling a soil nematode comprising spraying a dilution of the soil nematode control emulsion concentrate according to any one of Claims 1 or 2 , on a soil surface, and then mixing with the soil wherein the dilution is prepared by aqueous dilution of the soil nematode control emulsion concentrate.

5. A soil nematode control emulsion obtained from diluting the soil nematode control emulsion concentrate according to Claim 1 with water.

## Patentansprüche

1. Ein Emulsionskonzentrat zur Bekämpfung von Nematoden im Boden bestehend aus:
5 bis 20 Gew.-% einer Macrolidverbindung mit 16 Ringgliedern;
20 bis 70 Gew.-% einer oberflächenaktiven Substanz, wobei die oberflächenaktive Substanz eine Kombination aus einer anionischen oberflächenaktiven Substanz und einer nicht-ionischen oberflächenaktiven Substanz ist,
wobei die anionische oberflächenaktive Substanz aus der Gruppe ausgewählt ist, bestehend aus
Alkylbenzolsulfonat,
Alkylnaphthalinsulfonat,
Dialkylsulfosuccinat, und
Polyoxyalkylenallylphenylethersulfat, und
wobei die nicht-ionische oberflächenaktive Substanz aus der Gruppe ausgewählt ist, bestehend aus
Polyoxyethylenstyrylphenylether und
Polyoxyalkylenallylphenylether; und
einem oder mehreren wasserlöslichen Lösemitteln mit einem Siedepunkt von 150°C oder höher,
wobei das eine oder die mehreren wasserlöslichen Lösemittel aus der Gruppe ausgewählt sind, bestehend aus Butyllactat, Ethyllactat, Dipropylenglycol, Polypropylenglycol, Diethylenglycolmonobutylether, Dimethylsulfoxid und N-Methylpyrrolidon.

2. Das Emulsionskonzentrat zur Bekämpfung von Nematoden im Boden gemäß Anspruch 1, wobei die Macrolidverbindung mit 16 Ringgliedern eine beliebige Verbindung aus Abamectin (CAS Nr. 71751-41-2); Ivermectin (CAS Nr. 70288-86-7), Eprinomectin (CAS Nr. 123997-26-2), Doramectin (CAS Nr. 117704-25-3) und Moxidectin (CAS Nr. 113507-06-5) ist.

3. Ein Nematodenbekämpfungsmittel umfassend das Emulsionskonzentrat zur Bekämpfung von Nematoden im Boden gemäß Anspruch 1 oder 2 und einen mineralischen Träger mit einer Partikelgröße von 63 µm bis 1000 µm.

4. Ein Verfahren zur Bekämpfung von Nematoden im Boden umfassend Versprühen einer Verdünnung des Emulsionskonzentrats zur Bekämpfung von Nematoden im Boden gemäß einem der Ansprüche 1 oder 2 auf einer Bodenoberfläche und dann Mischen mit dem Boden, wobei die Verdünnung durch eine wässrige Verdünnung des Emulsionskonzentrats zur Bekämpfung von Nematoden im Boden hergestellt wird.

5. Eine Emulsion zur Bekämpfung von Nematoden im Boden, die durch Verdünnen des Emulsionskonzentrats zur Bekämpfung von Nematoden im Boden gemäß Anspruch 1 mit Wasser erhalten wird.

## Revendications

1. Concentré d'émulsion de lutte contre les nématodes du sol, consistant en :
5 à 20 pour cent en poids d'un composé macrolide à cycle à 16 chaînons ;
20 à 70 pour cent en poids d'un tensio-actif, le tensio-actif étant une combinaison de :
un tensio-actif anionique et un tensio-actif non ionique,
dans lequel le tensio-actif anionique est n'importe lequel choisi dans le groupe consistant en :
alkyl benzène sulfonate,
alkyl naphtalène sulfonate,
dialkyl sulfosuccinate, et
allyl phényl éther sulfate polyoxyalkyléné, et
dans lequel le tensio-actif non ionique est n'importe lequel choisi dans le groupe consistant en :
styryl phényl éther polyoxyéthyléné et
allyl phényl éther polyoxyéthyléné ; et
un ou plusieurs solvants solubles dans l'eau ayant un point d'ébullition de 150°C ou plus,
dans lequel le ou les solvants solubles dans l'eau sont choisis dans le groupe consistant en le lactate de butyle, le lactate d'éthyle, le dipropylène glycol, le polypropylène glycol, le diéthylène glycol monobutyl éther, le diméthyl sulfoxyde et la N-méthylpyrrolidone.

2. Concentré d'émulsion de lutte contre les nématodes du sol, selon la revendication 1, dans lequel le composé macrolide à cycle à 16 chaînons est n'importe lequel parmi l'abamectine (CAS N°71751-41-2), l'ivermectine (CAS N°70288-86-7), l'éprinomectine (CAS N°123997-26-2), la doramectine (CAS N°117704-25-3) et la moxidectine (CAS N°113507-06-5).

3. Agent de lutte contre les nématodes comprenant le concentré d'émulsion de lutte contre les nématodes du sol selon l'une des revendications 1 ou 2 et un support minéral ayant une dimension de particule de 63 µm à 1 000 µm.

4. Procédé de lutte contre les nématodes du sol comprenant la pulvérisation d'une dilution du concentré d'émulsion de lutte contre les nématodes du sol selon l'une quelconque des revendications 1 ou 2, sur une surface de sol, puis le mélange avec le sol, dans lequel la dilution est préparée par dilution aqueuse du concentré d'émulsion de lutte contre les nématodes du sol.

5. Émulsion de lutte contre les nématodes du sol obtenue par la dilution avec de l'eau du concentré d'émulsion de lutte contre les nématodes du sol selon la revendication 1.
